# EUROPEAN PATENT APPLICATION

(11) **EP 0 583 623 A1**
(43) Date of publication of application: **23.02.1994**
(21) Application number: 93111413.6
(22) Date of filing: 16.07.1993
(51) Int. Cl.: G08B 3/10, H04Q 7/04

(54) **Arrangement for and method of locating an object or person within a geographical area, and localization transmitter and receiver suitable for the same**

(30) Priority: 27.07.1992 IT MI921818
(71) Applicant: ALCATEL ITALIA S.p.A., I-20158 Milano (IT)
(72) Inventor: Langone, Vincenzo, I-84129 Salerno (IT)
(74) Representative: Pohl, Herbert, Dipl.-Ing

(57) **Abstract**

The invention relates to arrangement for and method of locating an object or person within a geographical area, and localization transmitter and receiver suitable for the same.
The method is based upon the use of a plurality of localization receivers each covering a specified and limited geographical sub-area, and of a localization transmitter provided to the object or person to be located which autonomously and continuously transmits its own identity; when a localization receiver receives the transmission of an identity, it stores the latter in a database; in order to establish if the object or person is in the sub-area corresponding to said receiver, it is enough to scan the database.

## Description

The present invention relates to an arrangement for and a method of locating an object or a person within a geographical area and to a localisation transmitter and receiver suitable for the same.

The problem of locating automatically people or things even if often of great importance has not yet solved in a simple and effective manner.

The paging service, put at disposal by national PTTs and in the future on a European basis with the name of ERMES, contemplates the sending via ether of paging messages and receiving by suitable data receivers which persons to be searched are provided with; when one of such receivers receives a paging message relative to identification code for which it has been pre-arranged, it emits an acoustic announcement; naturally it is up to the person to communicate his own position.

The same location problem is faced daily and very often by radio-taxi stations: in fact these, upon request from a Customer to send a taxi to a particular point of the city, have to individuate the free taxi which is closest to the required point by sending via ether a message to all listening free taxis waiting for the communication of position from each of them and evaluating the closest.

As observed, all these solutions require human intervention and therefore they are rather slow and arbitrary.

It is an object of the present invention to provide an automatic localisation method and system.

This object is achieved through the method of locating an object or a person within a geographical area as set forth in claim 1, the arrangement, the localization transmitter and the localization receiver having respectively the characteristics set forth in claims 12, 10 and 11. Further advantageous aspects of the present invention are set forth in the subclaims.

By using a plurality of localization receivers, each covering a specified and limited geographical sub-area, and providing the object or person to be located with a localization transmitter that autonomously and repeatedly trasmits its own identity, the localization results easy and fast also because realized in a completely automatic manner: in fact, when a localization receiver receives the transmission of an identity, it memorizes the latter in a database and, in order to establish if the person or object is within the sub-area corresponding to such receiver, it is enough to scan the database.

The present invention will result better from the following not limiting description viewed in conjunction with the attached drawings in which:
- Fig. 1: represents a geographical area subdivided into sub-areas,
- Fig. 2: represents a schematic diagram of an embodiment of the arrangement in accordance with the present invention,
- Fig. 3: represents the write of a localization message according to the present invention,
- Fig. 4: represents the structure of a message record according to the present invention,
- Fig. 5: represents the block diagram of a localization transmitter according to the present invention,
- Fig. 6: represents the block diagram of a localization receiver according to the present invention,
- Fig. 7: represents the partial block diagram of an embodiment of the arrangement according to the present invention, and
- Fig. 8: represents the partial block diagram of another embodiment of the device in accordance with the present invention.

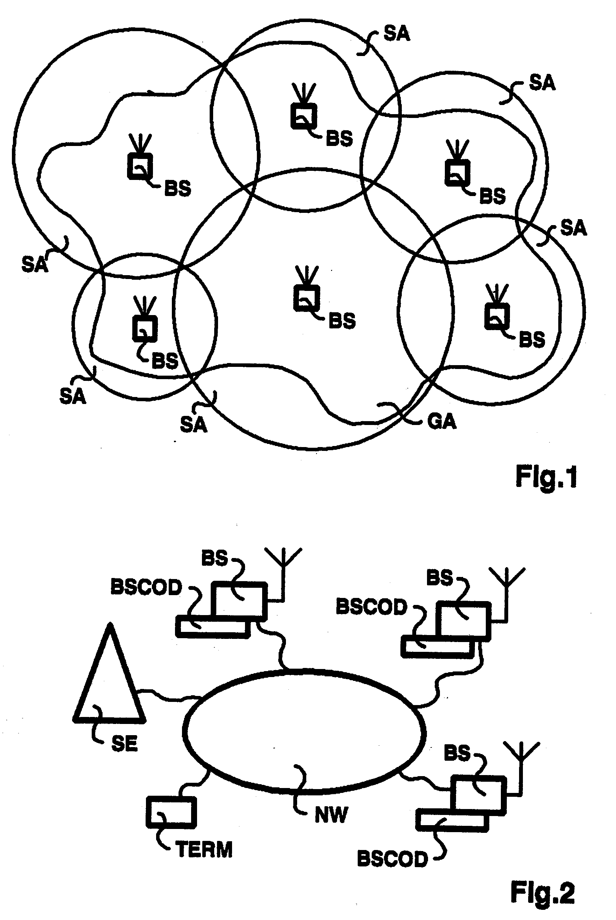

A geographical area GA having a typical irregular shape is shown in fig. 1; located inside it are a number of base stations BS which will be described more in detail later on. Associated with each base station BS is a geographical sub-area SA and the various sub-areas SA are generally different each other.

In order to clear better the concept of sub-area, it is necessary to say in advance that each base station is provided with a localization receiver designed to receive signals emitted from one or more localization transmitters; if all the localization transmitters are able to emit signals having the same RF power, the capability of a base station BS of receiving a signal emitted by a localization transmitter depends on the sensitivity of the corresponding localization receiver.

Each base station BS is therefore provided with a localization receiver generally having a different sensitivity; that means each base station BS is able to cover, in reception, an area in the shape of a circle having the center at the station itself and the radius depending on sensitivity: such circular area is the one defined as geographical sub-area SA.

It is clear that, if one desires to cover the entire geographical area by means of circular sub-areas, there will be places wherein a signal emitted from a localization transmitter will be received by a plurality of localization receivers; therefore, in the present description, the ratio between geographical area and sub-area is very different from e.g. the ratio between continent and nations.

In fig. 2 there is shown a schematic diagram of an embodiment of the arrangement according to the present invention, but it will be used for illustrating two possible embodiments.

A first embodiment comprises a communication network NW of any type (MAN, circuit switching, packet switching, ATM, etc.), a plurality of base stations BS provided with an own station code BSCOD and connected to said network NW, and a terminal TERM also connected to said network NW; as said before, each station BS must be provided with an own localization receiver.

A second embodiment comprises all the elements of the first one and in addition a localization service center also connected to the network NW; in this second instance, as will be seen hereinafter, the structure and the functionality of the single components of the arrangement are rather different with respect to the first embodiment.

The localization method according to the present invention is realized through a plurality of base stations BS, each comprising at least a localization receiver and being associated with a specified and limited sub-area SA of a geographical area GA, said plurality (BS) being such as to cover in reception the entire geographical area GA, and by providing the object or person to be located with a localization transmitter emitting signals capable of being received by said localization receivers, and comprises the steps of:
a) emitting repeatedly from said localization transmitter a localization message including an identity code associated with the identity of said object or person,
b) receiving said emitted message by at least one of said localization receivers,
c) loading a message record, comprising said identity code included in said emitted message, into a data base by the station corresponding to the receiver of step b), and
d) searching in said database the code corresponding to the identity of said object or person.

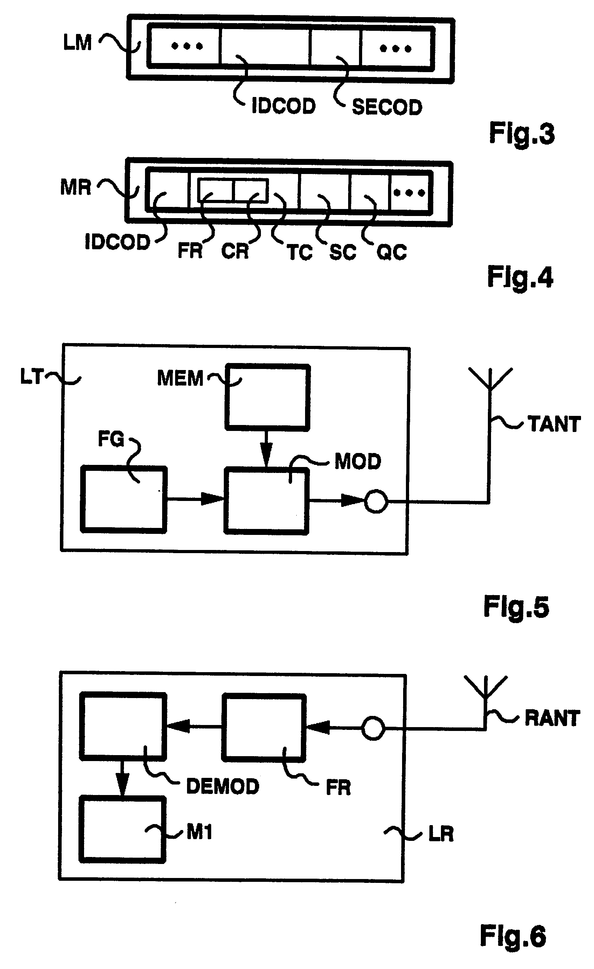

The structure of a localization message LM is shown in fig. 3. It comprises at least an identity code IDCOD and may comprise further a service code SECOD; in addition further information able to identify, e.g., the start and the end of the message, to allow individuation and correction of transmission errors, or to provide auxiliary information, may be present: this is well known to those skilled in the art.

The structure of a message record MR is shown in fig. 4. It comprises at least an identity code identical to the one included in the localization message LM. It may further include information TC concerning message reception time coordinates (e.g. hour and minute of reception or also day, month and year), information SC concerning message reception space coordinates (e.g. receive station code BSCOD, or also the signal incoming direction with respect to the North), information QS concerning the quality of message reception (e.g. power, S/N ratio), and also further information.

Stations BS cancel the message records MR contained in the database after prefixed time intervals and according to predetermined criteria; the choice of time intervals and criteria is to be made among many alternatives and above all depends on the kind of localization service that must be provided and on the frequency with which the localization messages are emitted by the localization transmitters: for instance one may cancel the message records MR present in the database since more than one minute, one hour, or one day, or cancel records MR whose code IDCOD does not belong to a certain list, or cancel records MR relative to a certain IDCOD soon after a search relevant to the same code has occurred.

In order to minimize the memory occupation of said database it may be contemplated that at most one record MR for each received code IDCOD is maintained in the database: in this case information TC is subdivided into a first-reception coordinate FR and a last-reception coordinate CR, and the base station BS, upon reception of a message LM comprising a certain identity code IDCOD, at first checks if a record MR relative to said certain code IDCOD is already present in the database, in the negative it creates one and fill coordinates FR and CR with the same information, in the affirmative it leaves unchanged the coordinate FR and updates the coordinate CR; consequently also information SC and QC may be subdivided according to the same philosophy.

If the base stations BS are connected to a communication network NW, step d) of the method is realized by sending at least one interrogation message on said communication network and receiving at least one response message from said communication network; depending on the type of network the format and number of said message change: for instance, one may broadcast an interrogation message to all or to a set of stations BS locating the object or person identified by a particular code IDCOD, or send a set of messages each to a different station BS; the response message will consist in signalling the presence of the object or person identified by the particular code IDCOD in a certain sub-area SA covered by a certain station BS identified by its code BSCOD; depending on the philosophy according to which the stations BS cancel the message records MR contained in the database, the response messages can be one or many.

If further a service center SE is connected with network NW, there is only one interrogation message, the service center receives said message, interpretes it, consequently carries out some actions, elaborates only one response message and transmits it. While the structure of the interrogation message can be similar to the preceding case, the structure of the response message can be much more complicated corresponding, e.g., to the association of information contained in many answer messages of the preceding type.

The presence of the service center SE offers two different possibilities: to have a database for each station BS or to have a local centralized database at the service center SE. In this second instance step c) of the method consists in sending information concerning the reception of said localization message emitted to center SE through network NW, and in loading such information in the centralized database according to rules preestablished by the manager of the center SE; such information, for simplicity and uniformity reasons, can be collected in a message record guide similar to the one used in the centralized database.

For the practical carrying out of such localization service it is very advantageous to implement the method in accordance with the present invention through the public radiomobile network, both as implemented at the present time and in future implementations; for such network there is already contemplated a plurality of base stations provided with a receiver (and also a transmitter) having a certain covering area and connected with a telecommunication network (at present public network and in the future ISDN); it is easy to foresee connection of terminals and service centers with the network according to the concept of intelligent networks. In this instance the base stations have to determine if the messages come from mobile telephone apparatuses or from localization transmitters: to this end it is necessary to contemplate at least a service code SECOD in the localization message LM, see fig. 3; still in such assumption, in order that the base stations are able to handle both types of message, it is necessary to see that they are compatible each other as to the internal structure of the information.

The block diagram of a localization transmitter LT in accordance with the present invention is shown in fig. 6. It comprises:
a) memory means MEM capable of storing a localization message LM,
b) a high-frequency generator FG capable of generating a high-frequency signal, and
c) a modulator MOD capable of associating information loaded in the memory means MEM with said high-frequency signal.

During operation transmitter LT emits repeatedly, through transmit antenna TANT, said radio-frequency signal together said information associated therewith.

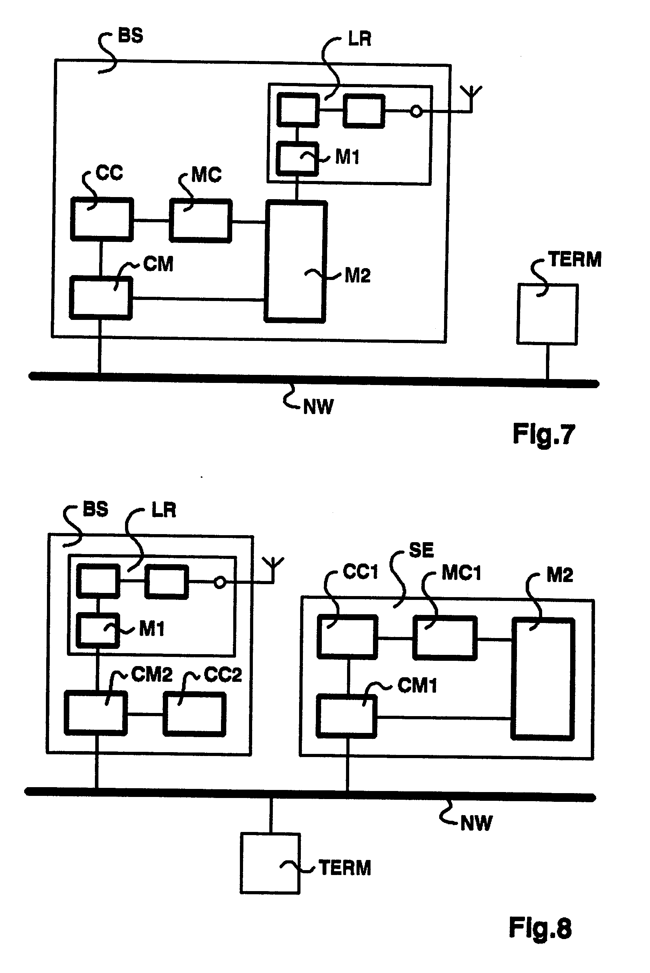

The block diagram of a localization receiver LR in accordance with the present invention is shown in fig. 7. It comprises:
a) a high-frequency receive stage FR capable of receiving a modulated high frequency signal from receive antenna RANT,
b) a demodulator DEMOD capable of extracting from said high-frequency information associated therewith by modulation, and
c) first memory means M1 capable of temporarily storing said information extracted by said demodulator and able to contain at least a localization message LM.

The partial block diagram of a first embodiment of the arrangement according to the present invention is shown in fig. 7. In such embodiment it is contemplated the presence of a communication network NW, schematically represented by a wire, at least one terminal TERM capable of processing and sending interrogation messages on the network NW and of receiving and interpreting response messages, and a plurality of base stations BS, only one of which being represented in fig. 7.

The base station BS in particular comprises: a localization receiver LR provided with first storage means MS, as already described above, means LM for interconnection to a communication network (NW in the example), an interconnection controller CC capable of operating receptions of interrogation messages from the communication network transmissions of response messages towards the same network, second storage means M2 capable of permanently storing a plurality of message records MR, and a memory controller capable of operating writings of localization messages contained in said first storage means M1, readings from said second storage means M2, interpretation of said interrogation messages and processing of said response messages.

The partial block diagram of a second embodiment of the arrangement in accordance with the present invention is shown in fig. 8. In such embodiment it is contemplated the presence of a communication network NW schematically represented by a wire, at least a terminal TERM capable of processing and sending interrogation messages on the network NW and of receiving and interpreting response messages, a service center SE capable of receiving from network NW and interpreting interrogation messages and capable of processing and transmitting response messages, and a plurality of base stations BS only one of which being represented in fig. 8.

In particular the service center SE comprises: first means CM1 for interconnection to a communication network (NW in the example), a first interconnection controller CC1 capable of operating the reception of said interrogation message from the communication network and the transmission of said response message towards the same network, second storage means M2 capable of permanently storing a plurality of message records MR, a memory controller MC1 capable of operating writings of data from said base stations BS in said second storage means M2, readings from said storage means M2, interpretations of said interrogation messages and processing of said response messages.

In particular the base station BS comprises: a localization receiver LR provided with first storage means M1, as described above, second interconnection means CM2 to the communication network, and a second interconnection controller CC2 capable of operating the sending to said service center SE of data relative to localization messages each time received from the corresponding localization receiver LR.

There is also the possibility, already described but not shown in detail in any figure, that the arrangement comprises a plurality of base stations BS provided with an own database, i.e. of second storage means M2, and service center SE provided with local intelligence, besides of a terminal TERM and a communication network NW; the structure and the relative block diagram of such an embodiment can be easily deduced from the two embodiments hereinbefore described.

Naturally many other realizations such as to implement the method of this invention are also possible, and the three preceding ones are given by way of indicative examples.

As already mentioned, the present invention can be used in the fields of radio-taxis_{,} fast delivery of mails and parcels, and wherever the automatic localization within a geographical area is useful; naturally the greater the required localization accuracy, the smaller the dimension of the sub-area covered by each localization receiver will be.

The use of the present invention may be very useful also in the struggle against kidnapping and car theft: in fact, it is sufficient to provide the person or the car with such a localization transmitter, if only realized with miniature dimensions and applied in such a way as to make its takeout impossible, in order to be able to follow its displacements and hence locate it also after several days from the crime.

## Claims

1. Method of locating an object or person within a geographical area through a plurality of base stations, each comprising at least a localization receiver and being associated with a specified and limited sub-area of said geographical area, said plurality being such as to cover in reception the entire geographical area, said object or person being provided with a localization transmitter emitting signal able to be received by said localization receivers, comprising the steps of:
a) emitting repeatedly from said localization transmitter a localization message including an identity code associated with the identity of said object or person,
b) receiving said emittedmessage by at least one of said localization receivers,
c) loading, by the base station corresponding to the receiver of step b), in a database a message record comprising said identity code included in said emitted message, and
d) searching in said database the code corresponding to the identity of said object or person.

2. Method according to claim 1 characterized in that said message record further comprises information concerning reception time and space coordinates of said emitted message.

3. Method according to claim 1 characterized in that each base station is identified by an univocal station code and in that said message record further comprises information concerning reception space coordinates of said emitted message.

4. Method according to claim 1 characterized in that said message record further comprises information concerning the reception quality of said emitted message.

5. Method according to claim 1 characterized in that said base station erases the message records contained in said database after prefixed periods of time in accordance with predetermined criteria.

6. Method according to claim 2 characterized in that said time coordinates are subdivided at least into one coordinate relative to the first reception and one coordinate relative to the last reception, and in that upon reception of a message comprising a certain identity code, if in said database there is already a message record relative to said certain identity code, said coordinate relative to last reception is updated.

7. Method according to claim 1 characterized in that said base stations of said plurality are connected to a communication network and that said step d) is carried out by sending at least an interrogation message on said communication network and receiving at least one response message from said communication network.

8. Method according to claim 1 characterized in that said base stations of said plurality are connected to a communication network provided with at least one localization service center and that said step c) consists in sending said message record to said center through said network, and in loading it into a centralized database, local at said local at said center, according to rules pre-established by a manager of the center.

9. Method according to claim 1 characterized in that said localization message further comprises a service code capable of establishing its provenience from a localization transmitter, and in that said plurality of base stations correspond to public base stations of the radio mobile service and that the receptions are handled by said public base stations in a different manner depending on said service code.

10. Localization transmitter particularly suitable for implementing the method of claim 1 characterized in that it comprises:
a) memory means capable of storing a localization message,
b) a high-frequency generator capable of generating a high-frequency signal, and
c) a modulator capable of associating information loaded into said memory means with said high-frequency signal;
and in that during operation it emits repeatedly said radio-frequency signal and said information associated therewith.

11. Localization receiver particularly suitable for implementing the method of claim 1, characterized in that it comprises:
a) a high-frequency reception stage capable of receiving a modulated high-frequency signal,
b) a demodulator capable of extracting from said high-frequency signal the information associated therewith through modulation, and
c) first memory means capable of temporarily storing said information extracted by said demodulator and able to contain at least one localization message.

12. Arrangement for locating an object or person within a geographical area, particularly suitable for implementing the method of claim 1, characterized in that it comprises a communication network, a plurality of base stations each comprising a localization receiver as claimed in claim 11 and connected to said communication network, and at least one terminal connected to said communication network, capable of processing and sending interrogation messages on said network and of receiving and interpreting response messages.

13. Arrangement according to claim 12, characterized in that said base station further comprises means for the interconnection to a communication network, an interconnectioncontroller capable of operating interrogation message receptions from said communicationnetwork and response nessage transmissions towards the same, second memory means capable of permanently storing a plurality of message records, and a memory controller capable of operating writings of localization messages contained in said first memory means, readings from said second memory means, interpretation of said interrogation messages and processing of said response messages.

14. Arrangement according to claim 12 characterized in that it further comprises a localization service center connected to said communication network.

15. Arrangement according to claim 12 characterized in that said service center comprises first means for the interconnection to said communication network, a first interconnection controller capable of operating the reception of said interrogation message from said communication network and the transmission of said response message to the same, second memory means capable of permanently storing a plurality of message records, a memory controller capable of operationg writings of data from said base stations into said second memory means, readings from said second memory means, interpretation of said interrogation messages and processing of said response messages; and in that each of said base stations further comprises second means for the interconnection to said communication network, and a second interconnection controller capable of operating the sending to said service center of data relative to localization from time to time received by the corresponding localization receiver.
